# FASCICULE DE BREVET EUROPEEN

(11) **EP 1 251 617 B1**
(45) Date de publication et mention de la délivrance du brevet: **21.03.2007**
(21) Numéro de dépôt: 02290874.3
(22) Date de dépôt: 08.04.2002
(51) Int. Cl.: H02G 15/013, H02G 3/08

(54) **Joint d'étanchéité pour cables**
Kabelabdichtung
Cable sealing

(30) Priorité: 12.04.2001 FR 0105047
(43) Date de publication de la demande: 23.10.2002
(73) Titulaire: Nexans, 75008 Paris (FR)
(72) Inventeur: Milanowski, Michel, 60540 Anserville (FR); Vincent, Alain, 77230 Juilly (FR)
(74) Mandataire: Lenne, Laurence

(56) Documents cités:
- EP-A- 0 029 571
- EP-A- 0 638 975
- FR-A- 2 728 080
- US-A- 5 331 114
- US-A- 5 504 276

## Description

La présente invention concerne un boîtier étanche de protection d'épaissures pour câbles, en particulier pour câbles électriques ou optiques de télécommunication.

Elle se rapporte plus précisément à un boîtier étanche de protection d'épissures pour câbles, en particulier électriques ou optiques de télécommunication, contenant un gaz sous pression,.

Un tel dispositif de joint d'étanchéité est connu du document de brevet DE-U-78 24 425. Selon ce document, un joint est monté de façon classique sur un boîtier plus précisément sur un tube support monté sur ce dernier et est serré par un écrou ou presse-étoupe vissé sur ladite tubulure et venant le comprimer contre le câble. Ce joint comporte une partie tronconique extérieure se terminant par une lèvre d'étanchéité qui est pressée sur la périphérie du câble par l'écrou vissé. Ce joint comporte également des lèvres d'étanchéité intérieures flexibles disposées vers intérieur du boîtier et en appui par déformation élastique contre le câble.

Ces dernières lèvres intérieures ont un rôle d'étanchéité complémentaire de la lèvre extérieure, ne pouvant assurer à elles seules une étanchéité efficace, compte tenu de la pression de gaz régnant à l'intérieur du boîtier.

Le but de l'invention est de procurer une partie d'étanchéité intérieure qui assure une étanchéité complète à elle seule c'est-à-dire qui ne nécessite pas l'association d'une lèvre extérieure pour réaliser un joint d'étanchéité efficace.

Par ailleurs, un joint d'étanchéité pour câbles destiné à être monté en entrée d'un boîtier étanche est décrit dans le brevet US 5 504 276, qui représente l'état de la technique le plus proche.

L'invention propose un boîtier étanche de protection d'épissures pour câbles, en particulier électriques ou optiques de télécommunication, contenant un gaz sous pression, ledit boîtier comprenant une entrée présentant une tubulure solidaire du boîtier, un joint d'étanchéité comportant au moins une première partie cylindrique tubulaire de diamètre constant à laquelle est raccordée une seconde partie d'étanchéité destinée à venir en appui périphérique sur le câble et constituée d'une partie tronconique tubulaire raccordée à l'extrémité de ladite première partie cylindrique, caractérisé en ce que cette seconde partie d'étanchéité est disposée vers l'intérieur dudit boîtier et a son extrémité de diamètre inférieur présentant un orifice de diamètre inférieur au diamètre des câbles à monter

Cet agencement présente pour avantage que le joint est réutilisable après démontage d'un ensemble d'étanchéité.

Par ailleurs, selon l'art antérieur cité plus haut, le diamètre de la lèvre d'étanchéité extérieure présente un diamètre intérieur inférieur au diamètre extérieur du câble afin d'assurer une pression contre ce dernier une fois l'écrou serré. Ce joint est donc destiné à un diamètre de câble particulier. Autrement dit, à un diamètre de câble est destiné un type de joint avec ses dimensions correspondantes à celles du câble.

Avantageusement, l'invention permet une standardisation des joints, un seul joint étant fabriqué et pouvant être monté sur une gamme de câbles de diamètre différent.

Selon un mode de réalisation préféré, l'extrémité de diamètre inférieur présente un orifice de diamètre inférieur au diamètre minimal des câbles à monter.

Un joint standard peut être fabriqué, son extrémité étant découpée au diamètre voulu avant d'être monté sur le câble, ce diamètre découpé étant légèrement inférieur à celui du câble pour assurer une bonne pression d'étanchéité contre la périphérie de ce dernier.

De préférence, ladite partie tronconique est pourvue sur sa face externe de gorges annulaires de découpe régulièrement espacées.

Ces gorges facilitent la découpe du joint au diamètre voulu, légèrement inférieur au diamètre du câble à monter.

Selon une variante, ladite partie cylindrique se termine par une lèvre d'étanchéité extérieure opposée à ladite partie tronconique.

Cette variante plus complexe a l'avantage de présenter des capacités d'étanchéité optimales, grâce à la combinaison d'une étanchéité intérieure et d'une étanchéité extérieure. De plus, compte tenu que, selon cette variante, le câble est supporté par deux contacts périphériques éloignés, intérieur et extérieur, du joint, il n'y a pas de dégradation du joint due à la flexion éventuelle du câble. Ceci est particulièrement important dans le cas d'un montage de plusieurs câbles par un joint unique à plusieurs alésages. En effet, dans ce cas, les câbles sont soumis lors du montage à des flexions provoqués par la rotation des éléments de l'ensemble d'étanchéité.

Dans le cas d'une première variante, le joint monté dans ladite tubulure avec sa partie d'étanchéité intérieure disposée vers l'intérieur du boîtier est maintenu en position par un bouchon cylindrique externe vissé sur la tubulure et maintenant longitudinalement ledit joint.

Dans le cas d'une seconde variante, le joint monté dans ladite tubulure avec sa partie d'étanchéité intérieure disposée vers intérieur du boîtier a sa lèvre d'étanchéité extérieure apte à être poussée périphériquement contre le câble par un guide-câble lui-même poussé dans la direction longitudinale par un écrou ou presse-étoupe vissé sur la tubulure.

L'invention est décrite ci-après plus en détail grâce à des figures ne représentant que des modes de réalisation préférés de l'invention.
La figure 1 est une vue en coupe longitudinale d'un ensemble de d'étanchéité comportant un joint d'étanchéité selon la première variante de réalisation de l'invention.
La figure 2 est une vue de face de cet ensemble d'étanchéité.
La figure 3 est une vue éclatée en perspective d'un ensemble de d'étanchéité comportant un joint d'étanchéité selon la seconde variante de réalisation de l'invention.
La figure 4 est une vue en coupe longitudinale de cet ensemble d'étanchéité.
La figure 5 est une vue en perspective d'un joint conforme à l'invention.

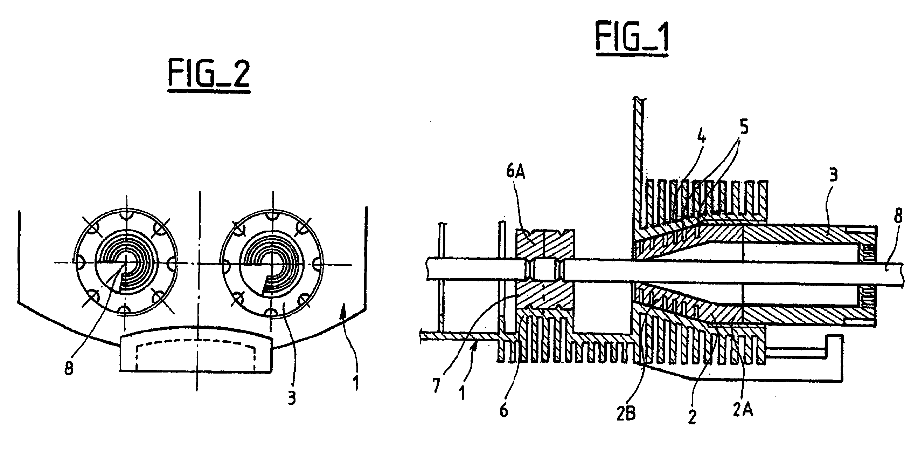

Les figures 1 à 4 représentent des ensembles d'étanchéité pour câbles, en particulier électriques ou optiques de télécommunication, destinés à être montés en entrée d'un boîtier 1 étanche de protection d'épissures contenant un gaz sous pression. Dans le cas de câbles optiques, ce gaz peut être de l'air.

Selon la variante représentée sur les figures 1 et 2, le boîtier comporte deux entrées de câbles 8 identiques et prévues côte à côte à travers une face frontale du corps 1 de boîtier. Le boîtier ne sera pas décrit ici de façon précise, c'est par exemple un boîtier d'épissurage du type décrit dans le document de brevet français 2 728 080. Chacune des entrées définit un passage ou tubulure 4 totalement fermé sur sa périphérie et solidaire du boîtier 1, dont la face intérieure est cylindrique et taraudée. Elle reçoit un joint 2 avec sa partie d'étanchéité intérieure 2B disposée vers l'intérieur du boîtier 1 et de forme correspondante et un bouchon 3 cylindrique externe vissé sur la tubulure 4 dans la partie taraudée et maintenant longitudinalement ledit joint 2.

Ce joint 2 est constitué d'une partie tronconique tubulaire 2B, d'épaisseur sensiblement constante, formant ladite partie d'étanchéité et raccordée à l'extrémité d'une partie cylindrique tubulaire 2A de diamètre constant et prolongeant celle-ci.

Il est découpable pour que l'extrémité de la partie tronconique de diamètre inférieur soit de diamètre légèrement inférieur à celui du câble 8 à monter dans le joint. Il présente avantageusement à cet effet une série de gorges annulaires 5 de découpe régulièrement espacées le long de sa partie tronconique 2B.

Le joint standard 2 (avant découpage) comporte donc une partie d'étanchéité intérieure 2B destiné à venir en appui sur le câble 8 et à être disposée vers l'intérieur dudit boîtier 1. Cette partie d'étanchéité intérieure 2B est constituée d'une partie tronconique dont l'extrémité de diamètre inférieur présente un orifice de diamètre inférieur au diamètre minimal de câbles 8 à monter et est destinée à être montée disposée vers l'intérieur du boîtier 1.

Le câble 8 est enfilé en force dans le joint découpé et déjà mis en place. Le déplacement de matière du joint lors de l'insertion du câble 8 dans celui-ci assure l'étanchéité de ce câble dans son entrée. Le bouchon 3 maintient le joint 2 en place dans la tubulure 4. Le câble est alors amarré dans la cloison 6 du corps de boîtier au droit de cette entrée à l'aide d'une bague d'amarrage 7 bloquée dans cette cloison 6 par la bride d'amarrage 6A.

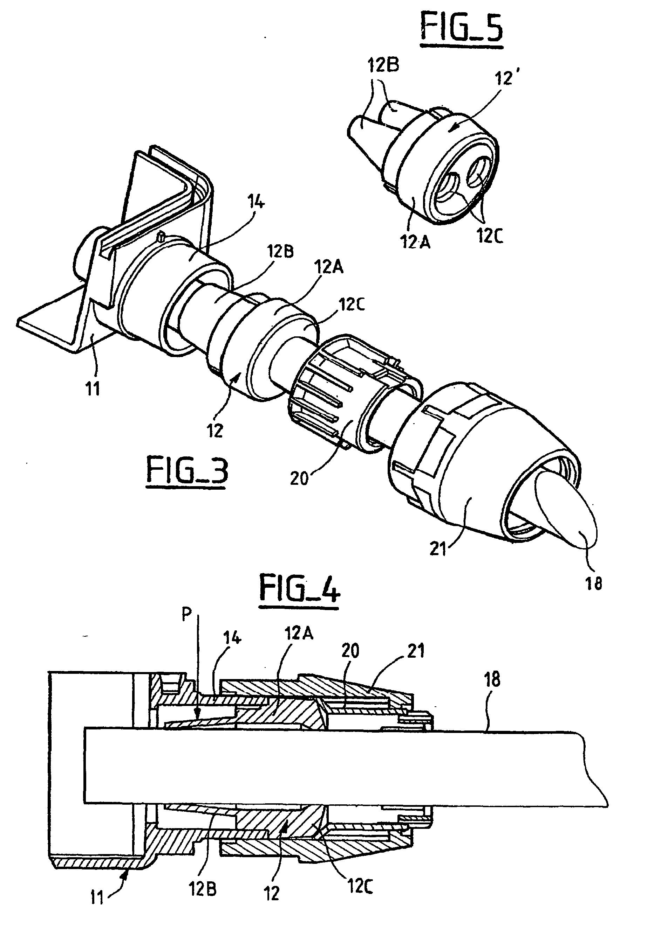

Selon une autre variante représentée sur les figures 3 et 4, le boîtier 11 comporte une entrée de câble 18 à travers une face frontale du corps 11 de boîtier. L'entrée définit un passage ou tubulure 14 totalement fermé sur sa périphérie, solidaire du boîtier 11 et dont la face extérieure est cylindrique et taraudée. Elle reçoit un joint 12 avec sa partie d'étanchéité intérieure 12B disposée vers l'intérieur du boîtier 11 et un agencement en soi connu de guide-câble 20 et d'écrou ou presse-étoupe 21 vissé sur la tubulure 14 dans la partie taraudée.

Ce joint 12 est constitué d'une partie tronconique tubulaire 12B, d'épaisseur sensiblement constante, formant ladite partie d'étanchéité et raccordée à une partie cylindrique tubulaire 12A de diamètre constant se terminant par une lèvre d'étanchéité 12C extérieure opposée à ladite partie tronconique 12B.

Le joint 12 monté dans ladite tubulure 14 avec sa partie d'étanchéité intérieure 12B dirigée vers l'intérieur du boîtier 11 a sa lèvre d'étanchéité extérieure 12C poussée contre le câble 18 par le guide-câble 20 lui-même poussé dans la direction longitudinale par l'écrou ou presse-étoupe 21 vissé sur la tubulure 14.

La figure 5 représente un joint 12' à double alésage conforme à l'invention comportant deux parties tronconiques tubulaires 12B afin de permettre le passage de deux câbles. Hors cette différence, la constitution de ce joint 12' est identique au précédent.

Les parties tronconiques 12B outre leur pression sur le câble par découpage à un diamètre légèrement inférieur à celui du câble à monter, bénéficient en plus de la pression P (voir figure 4) du gaz contenu dans le boîtier sur leur face radiale et constituent donc une excellente étanchéité. L'étanchéité augmente donc proportionnellement à la pression de gaz P.

Le joint est réalisé en matériau de dureté faible, par exemple en caoutchouc silicone.

Dans le cas de la première variante représentée sur les figures 1 et 2, la partie tronconique d'étanchéité intérieure 2B est d'épaisseur identique à celle de la partie cylindrique 2A et donc relativement importante. L'étanchéité est réalisée alors par déformation de la matière à l'extrémité de cette partie tronconique 2B qui s'écrase sur la périphérie du câble.

Dans le cas de la seconde variante représentée sur les figures 3 et 4, la partie tronconique d'étanchéité intérieure 12B est d'épaisseur inférieure à celle de la partie cylindrique 12A et relativement faible. L'étanchéité est alors réalisée par déformation de la matière à l'extrémité de cette partie tronconique comme précédemment et en plus par déformation élastique de la partie 12B en direction du câble, déformation proportionnelle à la pression P qui vient plaquer la partie 12B contre le câble.

## Revendications

1. Boîtier (1, 11) étanche de protection d'épissures pour câbles, en particulier électriques ou optiques de télécommunication, contenant un gaz sous pression, ledit boîtier comprenant une entrée présentant une tubulure (4, 14) solidaire du boîtier (1, 11), un joint d'étanchéité comportant au moins une première partie cylindrique tubulaire (2A, 12A) de diamètre constant à laquelle est raccordée une seconde partie d'étanchéité destinée à venir en appui périphérique sur le câble (8, 18) et constituée d'une partie tronconique tubulaire (2B, 12B) raccordée à l'extrémité de ladite première partie cylindrique, **caractérisé en ce que** cette seconde partie d'étanchéité est disposée vers l'intérieur dudit boîtier (1, 11) et a son extrémité de diamètre inférieur présentant un orifice de diamètre inférieur au diamètre des câbles à monter.

2. Boîtier selon la revendication 1, **caractérisé en ce que** l'extrémité de diamètre inférieur présente un orifice de diamètre inférieur au diamètre minimal des câbles à monter.

3. Boîtier selon la revendication 2, **caractérisé en ce que** ladite partie tronconique (2, 12) est pourvue sur sa face externe de gorges annulaires (5) de découpe régulièrement espacées.

4. Boîtier selon la revendication 1, **caractérisé en ce que** ladite partie cylindrique (2A, 12A) se termine par une lèvre d'étanchéité extérieure (12C) opposée à ladite partie tronconique (12B).

5. Boîtier selon l'une des revendications 1 à 3, **caractérisé en ce que** le joint (2) monté dans ladite tubulure (4) avec sa seconde partie d'étanchéité (2B) disposée vers l'intérieur du boîtier (1) est maintenu en position par un bouchon cylindrique externe (3) vissé sur la tubulure (4) et maintenant longitudinalement ledit joint (2).

6. Boîtier selon la revendication 4, **caractérisé en ce que** le joint (12) monté dans ladite tubulure (14) avec sa seconde partie d'étanchéité (12B) disposée vers l'intérieur du boîtier (11) a sa lèvre d'étanchéité extérieure (12C) apte à être poussée périphériquement contre le câble (18) par un guide-câble (20) lui-même poussé dans la direction longitudinale par un écrou ou presse-étoupe (21) vissé sur la tubulure (14).

## Claims

1. A seal casing (1, 11) for protecting splices for cables, in particular electrical or optical telecommunications cables, containing a pressurized gas, said casing comprising an inlet having tubing (4, 14) firmly attached to the casing (1, 11), a seal gasket including at least one first tubular cylindrical portion (2A, 12A) with constant diameter, to which is connected a second seal portion intended to peripherally press on the cable (8, 18) and consisting of a tubular frusto-conical portion (2B, 12B) connected to the end of said first cylindrical portion, **characterized in that** this second seal portion is positioned towards the inside of said casing (1, 11) and its end with a smaller diameter has a port with a diameter less than the diameter of the cables to be mounted.

2. The casing according to claim 1, **characterized in that**, the end with a smaller diameter has a port with a diameter less than the minimum diameter of the cables to be mounted.

3. The casing according to claim 2, **characterized in that** said frusto-conical portion (2, 12) is provided on its outer face with regularly spaced cut out annular grooves (5).

4. The casing according to claim 1, **characterized in that** said cylindrical portion (2A, 12A) ends with an outer seal lip (12C) opposite to said frusto-conical portion (12B).

5. The casing according to any of claims 1 to 3, **characterized in that** the gasket (2) mounted in said tubing (4) with its second seal portion (2B) positioned towards the inside of the casing (1) is held in position by an outer cylindrical plug (3) screwed onto the tubing (4) and holding said gasket (2) longitudinally.

6. The casing according to claim 4, **characterized in that** the gasket (12) mounted in said tubing (14) with its second seal portion (12B) positioned towards the inside of the casing (11) has its outer seal lip (12C) able to be peripherally pushed against the cable (18) by a cable-guide (20) itself pushed in the longitudinal direction by a nut or stuffing box (21) screwed on the tubing (14).

## Patentansprüche

1. Undurchlässiges Schutzgehäuse (1, 11) für Kabelspleißungen, insbesondere für elektrische oder optische Telekommunikationskabel, mit einem unter Druck stehenden Gas, wobei das Gehäuse einen Eingang mit einem Stutzen (4, 14) besitzt, der mit dem Gehäuse (1, 11) verbunden ist, einer Abdichtung mit mindestens einem ersten zylindrischen, röhrenförmigen Abschnitt (2A, 12A) mit konstantem Durchmesser, der mit einem zweiten Dichtungsabschnitt verbunden ist, der am Kabelumfang (8, 18) aufliegt und aus einem kegelstumpfartigen röhrenförmigen Abschnitt (2B, 12B) besteht, der mit dem Ende des ersten zylinderförmigen Abschnittes verbunden ist, **dadurch gekennzeichnet, dass** dieser zweite Dichtungsabschnitt in Richtung des Gehäuseinnern (1, 11) angeordnet ist, wobei sein Ende einen geringeren Durchmesser und eine Öffnung besitzt, die einen kleineren Durchmesser hat als die zu montierenden Kabel.

2. Gehäuse nach Anspruch 1, **dadurch gekennzeichnet, dass** sich an dem Ende des niedrigeren Durchmessers eine Öffnung befindet, die einen geringeren Durchmesser hat als der Mindestdurchmesser der zu montierenden Kabel.

3. Gehäuse nach Anspruch 2, **dadurch gekennzeichnet, dass** der kegelstumpfartige Abschnitt (2, 12) an seiner Außenseite in regelmäßigem Abstand ringförmige eingeschnittene Rillen (5) besitzt.

4. Gehäuse nach Anspruch 1, **dadurch gekennzeichnet, dass** der zylindrische Abschnitt (2A, 12A) in einer äußeren Dichtlippe (12C) endet, die dem kegelstumpfartigen Abschnitt (12B) gegenüber angeordnet ist.

5. Gehäuse nach einem der Ansprüche 1 bis 3, **dadurch gekennzeichnet, dass** die in den Stutzen (4) montierte Dichtung (2), deren zweiter Dichtungsabschnitt (2B) in Richtung des Gehäuseinnern (1) angeordnet ist, durch einen externen zylindrischen Stopfen (3) in Position gehalten wird, der auf den Stutzen (4) aufgeschraubt ist und die Dichtung (2) in Längsrichtung hält.

6. Gehäuse nach Anspruch 4, **dadurch gekennzeichnet, dass** die äußere Dichtlippe (12C) der Dichtung (12), die in dem Stutzen (14) montiert ist, und deren zweiter Dichtungsabschnitt (12B) in Richtung des Gehäuseinnern (11) angeordnet ist, am Umfang durch eine Kabelführung (20) - die selbst über eine Schraubenmutter oder eine auf den Stutzen (14) aufgeschraubte Stopfbüchse in Längsrichtung gedrückt wird - (21) gegen das Kabel (18) gedrückt werden kann.
